(19) Europäisches Patentamt
European Patent Office
Office européen des brevets

(11) Publication number: **0 137 289**
**A2**

(12) # EUROPEAN PATENT APPLICATION

(21) Application number: 84110386.4

(22) Date of filing: 31.08.84

(51) Int. Cl.[4]: C 01 B 33/18
C 01 B 33/12, B 01 J 29/04

(30) Priority: 31.08.83 US 528601
26.07.84 US 633429

(43) Date of publication of application:
17.04.85 Bulletin 85/16

(84) Designated Contracting States:
BE DE FR GB IT NL

(71) Applicant: E.I. DU PONT DE NEMOURS AND COMPANY
1007 Market Street
Wilmington Delaware 19898(US)

(72) Inventor: Yang, Duck Joo
4 Palomino Court
Wilmington Delaware 19803(US)

(74) Representative: Abitz, Walter, Dr.-Ing. et al,
Abitz, Morf, Gritschneder, Freiherr von Wittgenstein
Postfach 86 01 09
D-8000 München 86(DE)

(54) **Process for the preparation of silica polymorphs from silicon.**

(57) Process for the preparation of a variety of silica polymorphs using elemental silicon as the source of silicon.

EP 0 137 289 A2

Croydon Printing Company Ltd.

# TITLE

# PROCESS FOR THE PREPARATION OF SILICA POLYMORPHS FROM SILICON

## CROSS REFERENCE TO RELATED APPLICATION

This application is a continuation-in-part of copending application Serial No. 528,601, filed on August 31, 1983 entitled "Process for the Preparation of Silica Polymorphs from Silicon".

## BACKGROUND OF THE INVENTION

### Field of the Invention

The present invention relates to a process for preparing crystalline silica polymorphs (e.g., silicalites and zeolites) wherein elemental silicon is a source of silicon.

### Description of the Prior Art

One of the most frequently referenced sources of silicon for the preparation of silicalite and crystalline aluminosilicates is silica usually in the form of a 30% aqueous gel of colloidal silica. A typical disclosure of such sources of silicon is found in U.S. Patent 4,061,724 issued on December 6, 1977 wherein the patentees teach that in addition to alkali metal silicate, silicon sources include amorphous silica, e.g., fumed silica, silica sols and silica gels. U.S. Patent 4,259,306 issued on March 31, 1981 discloses silicic acid as a source of silicon. U.K. Patent Application 2,077,709 A published on December 23, 1981 cites some specific sources of silicon, e.g., powdered, solid silica and dissolved silica. The patentees suggest aerosol silicas in a grade suitable for use in reinforcing pigments for rubber as well as water-glass silicas and silicates made by dissolving silica in an alkali metal hydroxide or quaternary ammonia hydroxide as silicon sources. The use of organosilicon compounds

'7-A

as the silicon source has been described in combination with compounds of titanium (U.K. Patent Application 2,071,071 A published on September 16, 1981), aluminum (French Patent 2,478,063 published on September 18, 1981), germanium (U.K. Patent Application 2,023,562 A published on January 3, 1980) and iron and chromium (European Patent Application 0014059 published on August 8, 1980).

Summary of the Invention

This invention relates to an improved process for the preparation of silica polymorphs including those referred to as silicalites and zeolites which process comprises or consists essentially of introducing the silicon in the form of elemental silicon usually along with a template compound into an aqueous reaction medium under basic conditions, and thereafter heating the medium, e.g., at a temperature of in the range 100-300°C and a pH of at least 7.1. In one preferred embodiment the elemental silicon is in powder form having a mean particle size less than about 2000 and preferably less than about 350 microns. Other elements, e.g., aluminum, can be introduced along with the elemental silicon and thereby be incorporated in the polymorph.

Detailed Description of the Invention

The term silica polymorphs as used herein encompasses polymorphs containing essentially 100% silica as well as polymorphs containing up to about 50% of elements other than silicon. Examples of such elements include aluminum, boron, iron, chromium, zinc, gallium, phosphorous and arsenic either singularly or in combination. Elements which have been added to silica polymorphs according to prior art techniques can also be introduced along with the elemental silicon. If the element to be incorporated

in the polymorph is or becomes reactive under the conditions employed in the reaction, it can be added in same form as the silicon. Provisions must be made for handling the hydrogen gas which is produced in the present process as the silicon and other elements react.

Silicon can be used to prepare a wide variety of polymorphs including crystalline zeolites containing elements other than silicon as described in U.S. Patents 3,702,886 issued on November 14, 1972; 3,769,386 issued on October 30, 1973; 4,022,714 issued on May 10, 1977 and 4,120,910 issued on October 17, 1978. Zeolites as described in U.S. Patents 4,259,306 issued on March 31, 1981 and 4,357,233 issued on November 2, 1982 can also be prepared. Crystalline silica polymorphs as described in U.S. Patents 4,283,306 issued on August 11, 1981, 4,061,724 issued on December 6, 1977 and 3,941,871 issued on March 2, 1976; borosilicates as described in U.S. Patent 4,285,919 issued on August 25, 1981 and iron silicates as described in German Patent Application 2,831,611 laid open on February 7, 1980 can also be prepared according to the present invention. Other silica polymorphs should be apparent to those skilled in the art.

The present process involves heating a reaction mixture comprising water, elemental silicon, usually a template compound and optionally, a surface active and/or a dispersing agent under hydrothermal conditions at a pH of at least 7.1, preferably in the range 9.5-13.8 and most preferably in the range 10.5-13.8. Silicon can be obtained from a variety of sources including amorphous, polycrystalline and single crystalline silicon in the form of powders, wafers, rods or pellets it being understood that the

degree of subdivision, e.g., powder vs. pellets markedly influences the rate of reaction. Silicon produced commercially of carbon reduction of silica is another satisfactory source. A most desirable source is the waste products from the manufacture of semiconductors. High purity silicon powder can be used to prepare high purity silica polymorphs. Alloys of silicon, e.g., silicon-aluminum and silicon-iron alloys are suitable sources.

The reaction time and temperature are not critical and can be similar to those conditions employed in the prior art so long as sufficient time at elevated temperature is provided to permit the reaction of the silicon and the subsequent formation of the crystalline silica polymorphs. Usually the reaction temperature can vary from 100-300°C but preferably is maintained in the range of 140-200°C. The reaction time can be as long as practical but preferably does not exceed 30-300 hours. It is preferred to conduct the process in a continuous manner and thereby realize a substantial reduction in the reaction time. After the reaction product is separated from the liquid, e.g., by filtration, it is preferably washed and dried according to known techniques prior to further processing.

Numerous compounds are suitable when a template is required to produce the polymorph. If it is desired to produce exceptionally pure silica polymorphs, the template, except for alkali metal, should be essentially metal-free. Suitable templates can contain or consist essentially of alkylammonium cations defined by the formula

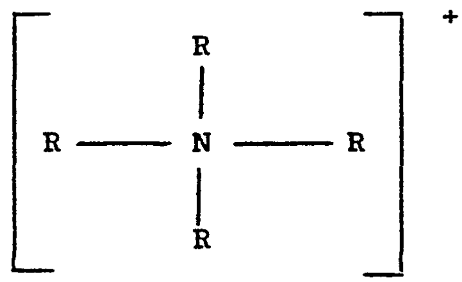
,

wherein the groups represented by R are the same or different and consisting of alkyl groups containing 1-6 carbon atoms. Preferably R is methyl, ethyl, n-propyl, n-butyl and isomers and mixtures thereof. Operable and preferred anions include hydroxide and halide, e.g., chloride. Illustrative compounds include tetramethylammonium hydroxide, tetraethylammonium hydroxide, tetrapropylammonium hydroxide, tetrabutylammonium hydroxide, and the salts corresponding to the aforesaid hydroxides, particularly the chloride, iodide and bromide salts, for example, tetrapropylammonium bromide. The quaternary cation can be supplied to the reaction mixture per se or can be generated in situ. Other templates include alkylamines, alcohol amines, monohydroxyalkylene trialkylammonium halides, alkali and ammonium alkyl sulfonates, acetamides, pentaerythritol, complex ions such as benzyltricmethylammonium, organic diols and organic carboxylic acids.

Additional templates include compounds wherein the nitrogen atom is replaced by phosphorus in the above formula and diamines having the formula $NH_2(CH_2)_nNH_2$ wherein n=2-12 such as ethylenediamine and hexamethylenediamine. Additional template compounds should be apparent to those skilled in the art.

The basicity of the reaction medium can be controlled by several methods. The template or the template in combination with an alkyl ammonium halide or a diamine, e.g., hexamethylenediamine, can provide the basicity. Ammonium hydroxide and an alkyl ammonium halide is also an acceptable combination. Alkali metal hydroxides can be used to supply basicity but are not preferred because, unlike the bases previously described, the residual alkali metal requires an additional processing to remove it from the polymorph.

Dispersing agents can be employed in the present process. Agents which do not participate in the reaction to a degree that the desirable characteristics of the silica polymorphs are reduced are preferred. Alcohols having from 1-6 carbon atoms are quite suitable. Examples of such alcohols include methanol, ethanol, n-propanol, n-butanol, n-pentanol, n-hexanol and their isomers. Other dispersing agents should be apparent to those skilled in the art. Surfactants such as ethoxylated alcohols, polyoxyethylene tridecyl ethers, polyethyleneglycol dilaurates and octyl phenoxy polyethoxy ethanol at a concentration of 2-10% by weight based upon the weight of reaction mixture can be used to accelerate the reaction. Other surfactants should be apparent to those skilled in the art.

The relative ratios of reactants can vary over rather wide limits but usually the relative amounts of the silicon (Si), the template compound (T), water ($H_2O$) and, optionally, surfactant (S), alcohol (A) elements (E) other than silicon expressed as mole ranges are Si/$H_2O$ of 0.005-0.25 and preferably 0.01-0.05, T/Si of 0.01-10 and preferably

0.1-1, $A/H_2O$ of 0-5 and preferably 0.02-1, E/Si of 0-1 and $S/H_2O$ of 0-0.15 and preferably 0.0001-0.001 mixtures of silicon, templates and alcohols are within the purview of the present invention. Premature solids formation which can occur in systems of high ionic strength can be minimized by methods known in the art, e.g., by dilution.

The following Examples which are summarized in Table I are presented to illustrate but not to restrict the present invention. Parts and percentages are by weight unless otherwise noted. The following abbreviations are used in the tabulated Examples:

TENOH = Tetraethylammonium hydroxide - 40% aqueous
NA = Not analyzed
TPNBr = Tetrapropylammonium bromide
TPNCl = Tetrapropylammonium chloride
TPNOH = Tetrapropylammonium hydroxide - 40% aqueous
HMD = Hexamethylenediamine - 85% aqueous
TMNOH = Tetramethylammonium hydroxide - 25% aqueous
TBNOH = Tetrabutylammonium hydroxide - 40% aqueous
ETOH = Ethanol
MEOH = Methanol

Examples 1-17

A slurry was prepared by combining the indicated reactants with vigorous stirring at 25°C. Solution weight is recorded for templates added in aqueous solution. The resultant slurry was treated in an autoclave equipped with pressure control, stirrer and heating jacket. The autoclave employed in Examples 1, 2, 3, 7, 8, 12, 14 and 17 was constructed of 316 stainless steel, in Examples 4, 5, 10, 11, 13 and 16 of Hastelloy B, in Example 6 of

Hastelloy C and in Example 15 of titanium. The autoclave was sealed and the temperature of its contents was raised slowly to 160°C with stirring (about 100-200 rpm) and held at 160°C with stirring for the time indicated under autogeneous pressure except that the autoclave was vented when necessary to prevent the pressure from exceeding 37.4 atm. In Example 9 the materials were charged to a bottle constructed of Teflon!, the bottle was placed in an autoclave and the contents of the bottle were not agitated during the reaction.

The solid crystalline product was recovered by filtration and washed three times, each time with a volume of water equal to the volume of solids following which the washed material was dried at 95°C in a nitrogen atmosphere. The X-ray diffraction pattern was measured on selected samples after heating the sample in air at 25-550°C with a 5°C/minute increase and then maintaining the sample in air at about 550°C for about 4 hours. The X-ray diffraction measurements were obtained with CuKa radiation at 40 Kev 40 mA on a Phillips diffractomer having a scintillation counter and compensating slit containing 12.5 mm of irradiated sample 3 mm in thickness. The patterns are referenced in Table I and shown in Tables II-XIII. The calcined product was also analyzed for aluminum and for iron and boron in Examples 16 and 17, respectively.

<u>Example 18</u>

A mixture of elemental silicon and 310 g of the water was heated with stirring in a glass vessel fitted with a reflux condenser. When the temperature of the controls of the vessel reached 72°C, a solution of the sodium hydroxide and tetrapropylammonium chloride in 110 g water was added over a

three-hour period while maintaining the temperature at 72°C following which the temperature of the contents was raised to 90°C and held at that temperature for 16 hours. The contents of the vessel were then transferred to an autoclave (316 SS) and treated as in Examples 1-17. The results are summarized in Table I.

Example 19

A mixture of elemental silicon, tetrapropylammonium bromide and water (385 g) was heated with stirring in a glass vessel fitted with a reflux condenser. When the temperature of the contents of the vessel reached 83°C, sodium hydroxide solution was added over a 30-minute period following which the temperature of the contents was then raised to 99°C and held at that temperature for 19 hours. The contents were then transferred to an autoclave (316 SS) and treated as in Examples 1-17. The results are summarized in Table I.

The products prepared according to the present invention can be used in essentially the same manner as polymorphs of similar composition which are prepared by different processes. Examples of uses for various forms of silicon containing polymorphs include catalysts as used in alkylation, hydrocracking and methylation, adsorbants as used in drying and molecular sieves and ion exchange.

**TABLE I**

| Example No. | Silicon Amount (g) | Template Type | Template Amount (g) | Alcohol Type | Alcohol Amount (g) | Water Amount (g) | Time (Hours) | Aluminum (ppm) | Product Recovered (g) | X-Ray Diffraction Pattern (Table No.) |
|---|---|---|---|---|---|---|---|---|---|---|
| 1 | 28[a] | TENOH | 160 | EtOH | 150 | 600 | 133 | 10 | 54 | II |
| | | TPNBr | 60 | | | | | | | |
| 2 | 28[a] | TENOH | 160 | EtOH | 150 | 600 | 196 | 10 | 53 | |
| | | TPNBr | 60 | | | | | | | |
| 3 | 28[a] | TPNOH | 200 | - | - | 600 | 102 | 385 | 55 | VII |
| 4 | 28[f] | TMNOH | 150 | - | - | 700 | 292 | 1,069 | NA | VIII |
| 5[dk] | 56[b] | TPNOH | 400 | - | - | 1200 | 96 | 343 | 135 | |
| 6 | 28[f] | HMD | 288 | EtOH | 156 | 400 | 118 | 447 | 67 | IX |
| 7 | 28[f] | HMD | 280 | EtOH | 150 | 400 | 101 | 484 | 60 | |
| 8 | 28[f] | TBNOH | 200 | - | - | 600 | 105 | 1,208 | 50 | X |
| 9 | 5.6[f] | TBNOH | 40 | - | - | 120 | 100 | 2,122 | 10 | |
| 10[c] | 28[f] | TENOH | 160 | EtOH | 150 | 600 | 86 | 1.31(%) | NA | |
| | | TPNBr | 60 | | | | | | | |
| 11[c] | 28[f] | TENOH | 160 | EtOH | 150 | 600 | 142 | 1.10(%) | 49 | XI |
| | | TPNBr | 60 | | | | | | | |
| 12[d] | 56[b] | TPNOH | 400 | - | - | 1200 | 181 | 14 | 120 | III |
| 13[e] | 42[b] | TMNOH | 278 | MeOH | 300 | 1050 | 250 | 30 | NA | IV |
| 14 | 14[b] | HMD | 140 | EtOH | 75 | 200 | 100 | 1 | 60 | V |
| 15 | 56[b] | TBNOH | 400 | - | - | 1200 | 180 | 14 | 100 | VI |
| 16[dg] | 50[b] | TENOH | 320 | - | - | 1200 | 152 | 9[i] | 75 | XII |
| | | TPNBr | 120 | | | | | | | |
| 17[dh] | 50[b] | TENOH | 320 | - | - | 1200 | 169 | 26[j] | 92 | XIII |
| | | TPNBr | 120 | | | | | | | |
| 18 | 30[l] | TPNCl[m] | 28.5 | - | - | 420 | 24 | NA | 53 | XIII |
| 19 | 30[n] | TPNBr[o] | 28.5 | - | - | 385 | 24 | NA | 13.8 | XIII |

a Mean Particle Size about 9 microns.
b Mean Particle Size about 350 microns.
c Approximately 0.65 gram of aluminum powder having a mean particle size of about 300 microns introduced with the silicon powder.
d Reaction temperature = 180°C.
e Reaction temperature = 170°C.
f Mean particle size about 27 microns.
g Approximately 1.0 gm of iron powder having a mean particle size of about 11 microns introduced with the silicon powder.
h Approximately 1.0 gm of boron powder having a mean particle size of about 2 microns introduced with the silicon powder.
i Iron content of the calcined product was 8,756 ppm.
j Boron content of the calcined product was 6,129 ppm.
k Approximately 50 gms of Pluronic® Grid (L101), a surfactaht, added.
l Particle size less than 88 microns.
m Added 9.28 g sodium hydroxide.
n Particle size between 88 microns and 149 microns.
o Added 40 g of 50 wt % aqueous solution hydroxide.

TABLE II

| d(Å) | Relative Intensity | d(Å) | Relative Intensity |
|---|---|---|---|
| 11.20 | 80 | 4.27 | 14 |
| 10.08 | 48 | 4.10 | 3 |
| 9.77 | 14 | 4.02 | 5 |
| 9.02 | 1 | 3.86 | 100 |
| 8.05 | <1 | 3.82 | 64 |
| 7.47 | 1 | 3.76 | 39 |
| 6.72 | 7 | 3.72 | 50 |
| 6.39 | 13 | 3.66 | 29 |
| 6.02 | 19 | 3.50 | 5 |
| 5.74 | 9 | 3.45 | 11 |
| 5.57 | 10 | 3.36 | 10 |
| 5.38 | 3 | 3.32 | 14 |
| 5.16 | 2 | 3.26 | 4 |
| 5.01 | 7 | 3.15 | 3 |
| 4.89 | <1 | 3.05 | 12 |
| 4.63 | 6 | 3.00 | 18 |
| 4.37 | 8 | 2.95 | 7 |

TABLE III

| d(Å) | Relative Intensity | d(Å) | Relative Intensity |
|---|---|---|---|
| 11.24 | 90 | 4.10 | 3 |
| 10.04 | 49 | 4.02 | 6 |
| 9.76 | 15 | 3.87 | 100 |
| 9.06 | 1 | 3.83 | 62 |
| 8.10 | <1 | 3.72 | 58 |
| 7.48 | 1 | 3.65 | 21 |
| 6.72 | 9 | 3.50 | 6 |
| 6.39 | 15 | 3.45 | 11 |
| 6.03 | 18 | 3.40 | 4 |
| 5.75 | 9 | 3.36 | 9 |
| 5.58 | 13 | 3.31 | 15 |
| 5.38 | 4 | 3.26 | 5 |
| 5.16 | 2 | 3.18 | 3 |
| 5.05 | 6 | 3.15 | 3 |
| 4.99 | 8 | 3.06 | 10 |
| 4.63 | 6 | 3.00 | 22 |
| 4.38 | 9 | 2.96 | 11 |
| 4.28 | 13 | | |

TABLE IV

| d(Å) | Relative Intensity | d(Å) | Relative Intensity |
|---|---|---|---|
| 11.08 | 5 | 2.90 | 6 |
| 6.78 | 27 | 2.69 | 4 |
| 5.79 | 79 | 2.57 | 1 |
| 5.55 | 60 | 2.51 | 13 |
| 4.80 | 29 | 2.42 | <1 |
| 4.41 | 28 | 2.36 | 15 |
| 4.30 | 3 | 2.27 | 22 |
| 3.93 | 37 | 2.23 | 14 |
| 3.71 | 92 | 2.16 | 5 |
| 3.40 | 43 | 2.12 | 3 |
| 3.26 | 100 | 2.06 | <1 |
| 3.21 | 16 | 2.02 | 2 |
| 3.05 | 13 | 1.97 | 4 |
| 2.94 | 11 | 1.94 | 9 |

TABLE V

| d(Å) | Relative Intensity | d(Å) | Relative Intensity |
|---|---|---|---|
| 11.73 | 29 | 3.07 | 2 |
| 10.18 | 8 | 2.86 | 14 |
| 7.12 | 3 | 2.74 | 2 |
| 6.10 | 4 | 2.69 | 2 |
| 5.85 | 9 | 2.62 | 2 |
| 5.26 | <1 | 2.48 | <1 |
| 4.92 | <1 | 2.43 | 2 |
| 4.20 | 100 | 2.38 | 3 |
| 3.90 | 70 | 2.34 | 4 |
| 3.63 | <1 | 2.23 | 2 |
| 3.46 | <1 | 2.15 | <1 |
| 3.37 | 2 | 2.10 | 6 |
| 3.16 | <1 | 2.06 | 4 |

TABLE VI

| d(Å) | Relative Intensity | d(Å) | Relative Intensity |
|---|---|---|---|
| 11.08 | 67 | 4.35 | 7 |
| 9.92 | 42 | 3.83 | 100 |
| 7.42 | 1 | 3.70 | 44 |
| 6.67 | 5 | 3.47 | 3 |
| 6.34 | 4 | 3.33 | 8 |
| 5.97 | 15 | 3.16 | 1 |
| 5.56 | 10 | 3.04 | 5 |
| 5.34 | 2 | 2.97 | 14 |
| 4.99 | 6 | 2.85 | 1 |
| 4.60 | 2 | 2.77 | <1 |

TABLE VII

| d(Å) | Relative Intensity | d(Å) | Relative Intensity |
|---|---|---|---|
| 11.15 | 81 | 4.26 | 14 |
| 10.02 | 51 | 4.08 | 3 |
| 9.70 | 12 | 4.01 | 6 |
| 9.00 | 1 | 3.86 | 100 |
| 8.05 | <1 | 3.82 | 82 |
| 7.45 | 1 | 3.75 | 43 |
| 7.12 | <1 | 3.72 | 58 |
| 6.71 | 6 | 3.65 | 39 |
| 6.37 | 13 | 3.49 | 6 |
| 6.00 | 18 | 3.44 | 12 |
| 5.71 | 11 | 3.40 | 5 |
| 5.57 | 15 | 3.35 | 11 |
| 5.36 | 3 | 3.31 | 14 |
| 5.15 | 2 | 3.25 | 5 |
| 5.00 | 7 | 3.17 | 3 |
| 4.88 | <1 | 3.14 | 4 |
| 4.62 | 6 | 3.05 | 16 |
| 4.46 | 2 | 2.98 | 18 |
| 4.36 | 8 | | |

TABLE VIII

| d(Å) | Relative Intensity | d(Å) | Relative Intensity |
|---|---|---|---|
| 11.17 | 1 | 3.21 | 8 |
| 9.09 | 2 | 3.15 | 3 |
| 8.31 | 3 | 3.05 | 13 |
| 6.82 | 9 | 2.95 | 13 |
| 6.59 | 4 | 2.86 | 1 |
| 6.28 | 6 | 2.79 | 3 |
| 5.80 | 47 | 2.71 | 2 |
| 5.55 | 46 | 2.61 | <1 |
| 5.35 | 2 | 2.51 | 9 |
| 4.81 | 32 | 2.42 | 2 |
| 4.56 | 6 | 2.36 | 12 |
| 4.43 | 28 | 2.27 | 24 |
| 4.30 | 13 | 2.23 | 6 |
| 4.00 | 25 | 2.16 | 3 |
| 3.94 | 44 | 2.12 | 4 |
| 3.71 | 100 | 2.06 | <1 |
| 3.58 | 5 | 2.02 | <1 |
| 3.41 | 45 | 1.97 | 3 |
| 3.27 | 71 | 1.94 | 4 |

TABLE IX

| d(Å) | Relative Intensity | d(Å) | Relative Intensity |
|---|---|---|---|
| 11.64 | 24 | 3.07 | 2 |
| 10.05 | 8 | 2.85 | 14 |
| 7.11 | 2 | 2.72 | 1 |
| 6.05 | 4 | 2.62 | 1 |
| 5.82 | 8 | 2.52 | <1 |
| 5.24 | <1 | 2.47 | 1 |
| 5.02 | <1 | 2.42 | 2 |
| 4.87 | 1 | 2.37 | 3 |
| 4.19 | 100 | 2.34 | 4 |
| 3.87 | 67 | 2.24 | 1 |
| 3.61 | 4 | 2.09 | 6 |
| 3.44 | 1 | 2.06 | 3 |
| 3.36 | 2 | | |

TABLE X

| d(Å) | Relative Intensity | d(Å) | Relative Intensity |
|---|---|---|---|
| 11.11 | 55 | 3.85 | 100 |
| 10.03 | 48 | 3.71 | 38 |
| 7.47 | <1 | 3.48 | 2 |
| 6.72 | 3 | 3.34 | 9 |
| 6.37 | 2 | 3.25 | <1 |
| 6.01 | 13 | 3.18 | <1 |
| 5.58 | 9 | 3.06 | 6 |
| 5.02 | 6 | 2.99 | 13 |
| 4.60 | 2 | 2.86 | 1 |
| 4.36 | 5 | 2.80 | <1 |
| 4.25 | 2 | | |

TABLE XI

| d(Å) | Relative Intensity | d(Å) | Relative Intensity |
|---|---|---|---|
| 11.12 | 59 | 4.36 | 7 |
| 9.99 | 33 | 4.26 | 12 |
| 9.73 | 11 | 4.08 | 3 |
| 9.03 | 1 | 4.01 | 6 |
| 8.06 | <1 | 3.86 | 100 |
| 7.46 | <1 | 3.82 | 67 |
| 7.14 | <1 | 3.75 | 36 |
| 6.71 | 5 | 3.72 | 50 |
| 6.36 | 10 | 3.65 | 32 |
| 6.01 | 12 | 3.49 | 6 |
| 5.72 | 8 | 3.44 | 11 |
| 5.58 | 11 | 3.35 | 10 |
| 5.37 | 2 | 3.31 | 12 |
| 5.17 | 1 | 3.25 | 5 |
| 5.04 | 5 | 3.18 | 3 |
| 4.99 | 6 | 3.14 | 4 |
| 4.86 | <1 | 3.06 | 12 |
| 4.62 | 5 | 2.98 | 14 |

TABLE XII

| d(Å) | Relative Intensity | d(Å) | Relative Intensity |
|---|---|---|---|
| 11.10 | 82 | 4.08 | 3 |
| 9.97 | 53 | 4.01 | 6 |
| 8.95 | 1 | 3.86 | 100 |
| 8.12 | <1 | 3.81 | 74 |
| 7.43 | <1 | 3.75 | 41 |
| 6.69 | 7 | 3.72 | 63 |
| 6.35 | 15 | 3.64 | 28 |
| 5.97 | 20 | 3.49 | 6 |
| 5.70 | 11 | 3.44 | 14 |
| 5.56 | 14 | 3.35 | 11 |
| 5.36 | 4 | 3.31 | 16 |
| 5.13 | 3 | 3.24 | 5 |
| 4.99 | 9 | 3.17 | 3 |
| 4.61 | 6 | 3.13 | 3 |
| 4.36 | 10 | 3.04 | 13 |
| 4.25 | 15 | 2.98 | 25 |

## TABLE XIII

| d(Å) | Relative Intensity | d(Å) | Relative Intensity |
|---|---|---|---|
| 11.21 | 100 | 4.09 | 4 |
| 10.06 | 61 | 4.01 | 7 |
| 9.75 | 18 | 3.87 | 100 |
| 9.04 | 1 | 3.82 | 66 |
| 8.09 | <1 | 3.72 | 65 |
| 7.47 | 2 | 3.66 | 24 |
| 6.71 | 9 | 3.63 | 22 |
| 6.36 | 16 | 3.60 | 4 |
| 6.00 | 23 | 3.49 | 6 |
| 5.71 | 12 | 3.44 | 13 |
| 5.58 | 15 | 3.35 | 9 |
| 5.37 | 3 | 3.31 | 16 |
| 5.16 | 2 | 3.26 | 6 |
| 5.04 | 8 | 3.19 | 3 |
| 4.99 | 10 | 3.14 | 3 |
| 4.89 | 1 | 3.05 | 11 |
| 4.61 | 7 | 2.99 | 26 |
| 4.36 | 10 | 2.96 | 14 |
| 4.26 | 15 | | |

CLAIMS

1. A process for the preparation of silica polymorphs which comprises introducing elemental silicon and a template compound into an aqueous reaction medium and heating said medium while maintaining its pH in the range 9.5-13.8 to a temperature in the range 100-300°C until said polymorph is formed.

2. The process of Claim 1 wherein the silicon is in powder form with a particle size of less than about 2000 microns.

3. The process of Claim 2 wherein the temperature is maintained in the range 140-200°C.

4. The process of Claim 3 wherein the particle size of the silicon powder is less than about 100 microns.

5. The process of Claim 1 wherein aluminum is introduced into the reaction medium prior to formation of the polymorph.

6. The process of Claim 1 wherein boron is introduced into the reaction medium prior to formation of the polymorph.

7. The process of Claim 1 wherein iron is introduced into the reaction medium prior to formation of the polymorph.

8. The process of Claim 1 wherein aluminum, boron, iron and mixtures thereof are introduced.

9. The process of Claim 1 wherein an aluminum-silicon alloy is introduced.

10. The process of Claim 2 wherein a nonionic surfactant is present in the reaction medium.

11. The process of Claim 1 wherein the template compound consists essentially of alkylammonium cations defined by the formula

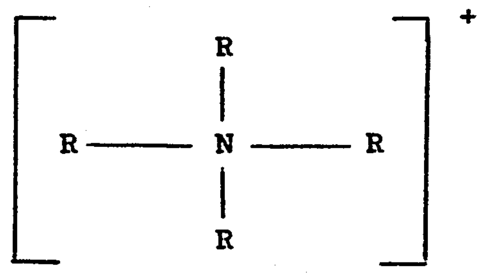

,

wherein the groups represented by R are the same or different and are selected from the class consisting of alkyl groups having 1-6 carbon atoms.

12. The process of Claim 11 wherein the cations are selected from the class consisting of tetrapropylammonium, tetramethylammonium, tetrabutylammonium and mixtures of the foregoing.